# EUROPÄISCHE PATENTSCHRIFT

(11) **EP 3 756 436 B1**
(45) Veröffentlichungstag und Bekanntmachung des Hinweises auf die Patenterteilung: **07.06.2023**
(21) Anmeldenummer: 20161946.7
(22) Anmeldetag: 10.03.2020
(51) Int. Cl.: A01B 59/06, A01B 59/048

(54) **FRONTKRAFTHEBER SOWIE ARBEITSMASCHINE MIT EINEM FRONTKRAFTHEBER**
FRONT HYDRAULIC LIFT AND WORKING MACHINE WITH A FRONT HYDRAULIC LIFT
RELEVAGE AVANT AINSI QUE MACHINE DE TRAVAIL DOTÉ D'UN RELEVAGE AVANT

(30) Priorität: 24.06.2019 DE 102019116934
(43) Veröffentlichungstag der Anmeldung: 30.12.2020
(73) Patentinhaber: CLAAS Tractor S.A.S., 78141 Vélizy-Villacoublay Cedex (FR)
(72) Erfinder: Rossignole, Julien, 78170 La Celle Saint-Cloud (FR)
(74) Vertreter: CLAAS Gruppe

(56) Entgegenhaltungen:
- EP-A1- 0 394 830
- EP-B1- 2 316 256
- NL-A- 8 500 976
- US-A- 4 519 623
- US-A1- 2011 147 020

## Beschreibung

Die vorliegende Erfindung betrifft einen Frontkraftheber gemäß dem Oberbegriff des Anspruches 1. Weiterhin hat die vorliegende Erfindung eine landwirtschaftliche oder kommunale Arbeitsmaschine mit einem Frontkraftheber, insbesondere einen Traktor, zum Gegenstand.

Frontkraftheber dienen insbesondere der Aufnahme von Anbaugeräten, wobei es sich bei den Anbaugeräten um Arbeitsgeräte, beispielsweise ein Mähwerk oder eine Vorbauegge, oder auch um einen Vorratsbehälter für Saatgut oder Flüssigkeiten handeln kann. Frontkraftheber weisen hierzu einen Oberlenker und zumindest einem Unterlenker auf, die jeweils um eine horizontal verlaufende Achse, d.h. parallel zum Boden verlaufende Achse, verschwenkbar sind. Der Oberlenker und der zumindest eine Unterlenker sind endseitig an der Arbeitsmaschine mittels quer zur Längsachse der Arbeitsmaschine orientierten Wellen oder Bolzen befestigt. Die freien Enden von Oberlenker und Unterlenker bilden Aufhängepunkte des Frontkrafthebers und dienen der lösbaren Aufnahme des Anbaugerätes. Diese Aufhängepunkte können als Fanghaken ausgebildet sein.

Ein Frontkraftheber sowie eine landwirtschaftliche Arbeitsmaschine sind aus der EP 2 316 256 B1 bekannt. Darin ist ein als Dreipunkthubwerk ausgebildeter Frontkraftheber, der an einem als Traktor ausgeführten Trägerfahrzeug angeordnet ist, beschrieben, welcher der Aufnahme eines Vorsatz- oder Anbaugerätes dient. Der Frontkraftheber weist zur Aufnahme eines Anbaugerätes einen Oberlenker und zumindest einen Unterlenker auf, die jeweils um eine horizontal verlaufende Achse verschwenkbar sind. Zur Minderung der Gewichtskraft und zur Bodenanpassung weist der Frontkraftheber ein hydropneumatisches Entlastungssystem auf. Das Entlastungssystem besteht aus einem hydropneumatischen Kraftspeicher mit einer Kolben-Zylindereinheit und einem hydropneumatischen Druckspeicher, welches im Bauraum des Dreipunkthubwerks oberhalb der Unterlenker angeordnet ist und einerseits direkt an dem aufzunehmenden Vorsatz- oder Anbaugerät oder dessen Kupplungseinrichtung und anderseits direkt an dem Trägerfahrzeug angeschlagen ist. Neben der Komplexität des Entlastungssystems ist der in Fahrzeuglängsrichtung notwendige Bauraum zur Anordnung der Komponenten des Entlastungssystems von Nachteil. Weitere Frontkraftheber sind aus den Dokumenten NL 8 500 976 A, EP 0 394 830 A1, US 4 519 623 A und US 2011/147020 A1 bekannt.

Ausgehend von dem vorstehend genannten Stand der Technik liegt der Erfindung die Aufgabe zugrunde, einen Frontkraftheber sowie eine landwirtschaftliche oder kommunale Arbeitsmaschine mit einem Frontkraftheber bereitzustellen, die sich durch einen einfacheren und bauraumsparenden Aufbau auszeichnen. Diese Aufgabe wird erfindungsgemäß durch einen Frontkraftheber mit den Merkmalen des Anspruches 1 gelöst. Vorteilhafte Weiterbildungen sind Gegenstand der Unteransprüche.

Gemäß dem Anspruch 1 wird ein Frontkraftheber zur Aufnahme eines Anbaugerätes vorgeschlagen, mit einem Rahmenteil, an dem ein Oberlenker und zumindest ein Unterlenker jeweils um eine horizontal verlaufende Achse schwenkbar angelenkt und angeordnet sind, wobei der zumindest eine Unterlenkerjeweils einen oberen Tragarm und einen unteren Tragarm jeweils mit mindestens einem ersten Gelenk aufweist, welches einen ersten Armabschnitt und einen zweiten Armabschnitt des jeweiligen Tragarmes gelenkig miteinander verbindet, wobei der jeweilige obere Tragarm und untere Tragarm in Form eines Parallelogramms gelenkig miteinander verbunden sind, und dass zwischen dem ersten Gelenk des unteren Tragarmes und dem ersten Gelenk des oberen Tragarmes jeweils ein Dämpfungselement angeordnet ist. Durch die Ausgestaltung des zumindest einen Unterlenkers des Frontkrafthebers in Form eines Parallelogramms und mit einem Dämpfungselement, welches die beiden ersten Gelenke miteinander verbindet, wird eine vertikale Ausgleichbewegung des Frontkrafthebers ermöglicht, so dass ein an dem Frontkraftheber angeordnetes Anbaugerät einer Bodenkontur zu folgen vermag. Das Passieren einer Bodenunebenheit führt dazu, dass die in Form eines Parallelogramms ausgestalteten unteren und oberen Tragarme, respektive deren jeweiliger erster Armabschnitt und zweiter Armabschnitt, eine Verschiebung zueinander erfahren, wodurch das Anbaugerät entsprechend der Höhe der Bodenunebenheit eine temporäre Verlagerung in vertikaler Richtung erfährt. Die Rückstellkraft des Dämpfungselements bewirkt, dass nach dem Passieren der Bodenunebenheit das Anbaugerät wieder in eine voreingestellte Position überführt wird, in welcher das Anbaugerät einen definierten, voreingestellten Abstand zum Boden aufweist. Vorteilhaft ist zudem, dass das Anbaugerät keinen eigenen Mechanismus zum Folgen einer Bodenkontur benötigt, wodurch Gewicht und Bauraum reduziert werden können. Gegenüber dem aus der EP 2 316 256 B1 bekannten Dreipunkthubwerk zeichnet sich die erfindungsgemäße Lösung durch einen einfacheren und bauraumsparenden Aufbau aus.

Bevorzugt kann das jeweilige Dämpfungselement mittels einer Einstellvorrichtung einstellbar sein. Mittels der Einstellvorrichtung kann das Dämpfungsverhalten des jeweiligen Dämpfungselementes angepasst werden, um unterschiedlich auf die Ausprägung von Bodenunebenheiten zu reagieren.

Insbesondere kann das jeweilige Dämpfungselement als eine Feder ausgeführt sein. Dabei kann die Feder beispielsweise als eine Schraubenfeder ausgeführt sein.

Vorteilhaft ist es, wenn der Federweg der Feder mittels einer Schraube oder Gewindestange einstellbar ist. Bei dieser vorteilhaften Ausführungsform kann die Schraube oder Gewindestange die Einstellvorrichtung bilden. Die vorzugsweise am oberen Tragarm angeordnete Schraube oder Gewindestange ermöglicht einen einfachen Zugang durch eine Bedienerperson, um den Federweg, insbesondere manuell, einzustellen bzw. zu verstellen. Alternativ kann eine Aktorik an der Schraube oder Gewindestange vorgesehen sein, durch welche eine Einstellung bzw. Verstellung des Federwegs ermöglicht wird. Die Einstellvorrichtung ist bevorzugt im Bereich des ersten Gelenks des oberen Tragarmes angeordnet.

Gemäß einer bevorzugten Weiterbildung kann an dem Unterlenker zumindest ein Stellzylinder angeordnet sein. Mittels des zumindest einen Stellzylinders ist der Frontkraftheber einstellbar. Damit kann der vertikale Abstand zwischen dem unteren Tragarm des zumindest einen Unterlenkers und dem Oberlenker eingestellt werden.

Weiterhin können der erste Armabschnitt und der zweite Armabschnitt des jeweiligen unteren Tragarmes jeweils eine erste Durchgangsbohrung aufweisen, die der lösbaren Aufnahme eines ersten Bolzens dienen, welcher das erste Gelenk des jeweiligen unteren Tragarmes ausbildet. Bevorzugt ist die jeweilige erste Durchgangsbohrung in den einander zugewandten Endbereichen des ersten Armabschnittes und des zweiten Armabschnittes des jeweiligen unteren Tragarmes angeordnet. Der Endbereich des ersten Armabschnittes ist bevorzugt gabelförmig ausgebildet. Der Endbereich des zweiten Armabschnittes kann zwischen den dem gabelförmig ausgebildeten Endbereich des ersten Armabschnittes angeordnet werden.

Weiterhin kann koaxial zu der ersten Durchgangsbohrung eine kreisringsegmentförmige Aussparung in dem ersten Armabschnitt vorgesehen sein, welche der Führung eines zweiten Bolzens dient, der sich beabstandet zu dem in den ersten Durchgangsbohrungen aufgenommenen ersten Bolzen mit einer Durchbohrung in dem zweiten Armabschnitt in Eingriff steht. Der zweite Bolzen ist ebenfalls lösbar angeordnet. Die kreisringsegmentförmige Aussparung begrenzt den Schwenkwinkel, um welchen der zweite Armabschnitt gegenüber dem ersten Armabschnitt um das erste Gelenk schwenkbar ist. Dabei kann die kreisringsegmentförmige Aussparung in Umfangsrichtung eine Erstreckung aufweisen, so dass in einer ersten Anschlagstellung, in welcher der zweite Bolzen an einem der äußeren Ende der kreisringsegmentförmigen Aussparung anliegt, der zweite Armabschnitt gegenüber dem ersten Armabschnitt einen Schwenkwinkel von 0° und in einer zweiten Anschlagstellung, in welcher der zweite Bolzen an dem gegenüberliegenden äußeren Ende der kreisringsegmentförmigen Aussparung anliegt, einen Schwenkwinkel von bis zu 70° einschließt. Die Anordnung des ersten Bolzens in der jeweiligen ersten Durchgangsbohrung und des zweiten Bolzens in der kreisringsegmentförmigen Aussparung bewirkt, dass die vertikale Auslenkung des sich in einer Schwebeposition befindlichen Anbaugeräts, welches den zumindest einen Unterlenker kinematisch mit dem Oberlenker koppelt, durch den Schwenkwinkel begrenzt wird.

Weiter bevorzugt kann benachbart zu der ersten Durchgangsbohrung eine zweite Durchgangsbohrung in dem ersten Armabschnitt und dem zweiten Armabschnitt angeordnet sein, mittels der der untere Tragarm und der obere Tragarm durch Umstecken des ersten Bolzens von der ersten Durchgangsbohrung in die zweite Durchgangsbohrung in einer Transportposition gehalten ist. Die zweite Durchgangsbohrung ist bezogen auf die Lage der ersten Durchgangsbohrung dem zweiten Armabschnitt abgewandt angeordnet. In der Transportposition befindet sich der zweite Bolzen in der zweiten Anschlagstellung. Aufgrund der versetzten Anordnung der zweiten Durchgangsbohrung schließt der zweite Armabschnitt mit dem ersten Armabschnitt einen Winkel von etwa 90° ein.

Weiterhin kann in dem ersten Armabschnitt eine dritte Durchgangsbohrung der ersten Durchgangsbohrung diagonal gegenüberliegend angeordnet sein, welche der Aufnahme des zweiten Bolzens dient, um den zweiten Armabschnitt gegenüber dem ersten Armabschnitt in einer von der Lage der dritten Durchgangsbohrung relativ zu der ersten Durchgangsbohrung in dem ersten Armabschnitt abhängigen Winkelposition zu fixieren. In dieser fixierten Winkelposition wird eine vertikale Ausgleichsbewegung des Anbaugerätes unterbunden.

Die eingangs gestellte Aufgabe wird zudem gemäß dem Anspruch 11 durch eine landwirtschaftliche oder kommunale Arbeitsmaschine mit einem Frontkraftheber gelöst, der nach einem der Ansprüche 1 bis 10 ausgebildet ist. Insbesondere kann die landwirtschaftliche Arbeitsmaschine als ein Traktor ausgeführt sein.

Die vorliegende Erfindung wird nachstehend anhand von in den Zeichnungen dargestellten Ausführungsbeispielen näher erläutert.

Es zeigen:
- Fig. 1: eine exemplarische und schematische Darstellung eines Frontkrafthebers in Seitenansicht, der an einer landwirtschaftlichen Arbeitsmaschine angeordnet ist;
- Fig. 2A: eine Prinzipskizze des Frontkrafthebers gemäß Fig. 1 zur Veranschaulichung der Kinematik in einer ersten Position;
- Fig. 2B: eine Prinzipskizze des Frontkrafthebers gemäß Fig. 1 zur Veranschaulichung der Kinematik in einer zweiten Position;
- Fig. 3: eine schematische Darstellung einer Ausführungsform eines Frontkrafthebers in einer isometrischen Ansicht;
- Fig. 4: eine schematische Darstellung eines ersten Armabschnitts und eines zweiten Armabschnitts eines unteren Tragarmes des Frontkrafthebers gemäß Fig. 3, wobei Ansicht (A) den zweiten Armabschnitt in einer ersten Endlage und Ansicht (B) den zweiten Armabschnitt in einer zweiten Endlage zeigt; und
- Fig. 5: eine schematische Darstellung des ersten Armabschnitts und des zweiten Armabschnitts gemäß Fig. 4, wobei Ansicht (A) den zweiten Armabschnitt in Transportposition des Frontkrafthebers und Ansicht (B) den zweiten Armabschnitt in fixierter Position des Frontkrafthebers zeigt.

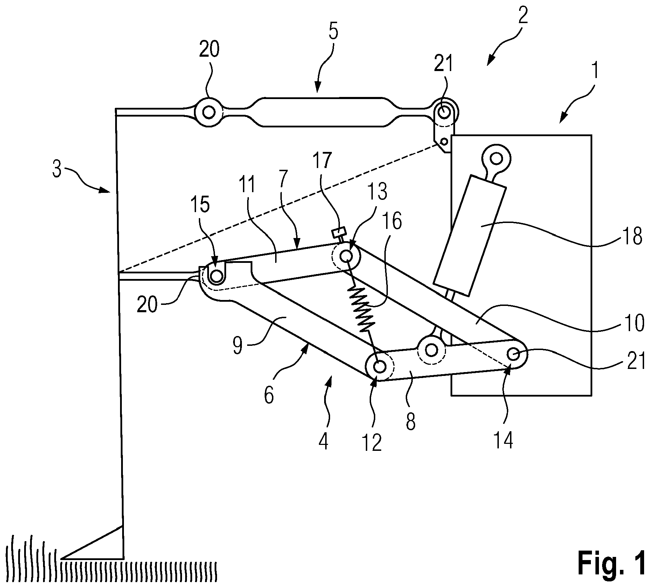

In Fig. 1. Ist eine exemplarische und schematische Darstellung eines erfindungsgemäßen Frontkrafthebers 2, der an einer - angedeuteten - Arbeitsmaschine 1 angeordnet ist, in Seitenansicht gezeigt. Die Arbeitsmaschine 1, die insbesondere als Traktor ausgeführt ist, nimmt mittels des Frontkrafthebers 2 ein lediglich schematisch angedeutetes Anbaugerät 3 auf. Bei dem Anbaugerät 3 handelt es sich beispielsweise um ein Frontmähwerk, welches im Betrieb in einem festgelegten Abstand zum Boden geführt wird.

Zur Aufnahme des Anbaugerätes 3 weist der Frontkraftheber 2 zumindest einen, vorzugsweise zwei, Unterlenker 4 sowie einen Oberlenker 5 auf. Der zweite Unterlenker 4 ist durch den im Vordergrund dargestellten Unterlenker 4 verdeckt. Beide Unterlenker 4 sind symmetrisch ausgeführt, so dass die nachfolgende Beschreibung für beide Unterlenker 4 des Frontkrafthebers 2 Gültigkeit hat. Zumindest die Unterlenker 4 weisen an ihren freien Enden Aufhängepunkte 20 auf, die als Fanghaken ausgebildet sein können, um das Anbaugerät 3 aufnehmen zu können. Am freien Ende des Oberlenkers 5 befindet sich ebenfalls ein Aufhängepunkt 20. Mittels der Aufhängepunkte 20 an den Unterlenkern 4 und dem Oberlenker 5 wird das Anbaugerät 3 am Frontkraftheber 2 gehalten.

Die Unterlenker 4 und der Oberlenker 5 sind jeweils um eine horizontal verlaufende, d.h. parallel zum Boden verlaufende, Achse 21 verschwenkbar. Der jeweilige Unterlenker 4 weist einen unteren Tragarm 6 und einen oberen Tragarm 7 auf. Jeder Tragarm 6, 7 weist einen ersten Armabschnitt 8 bzw. 10 und einen zweiten Armabschnitt 9 bzw. 11 sowie ein erstes Gelenk 12 bzw. 13 auf. Das erste Gelenk 12 des unteren Tragarmes 6 verbindet den ersten Armabschnitt 8 und den zweiten Armabschnitt 9 gelenkig miteinander. Das erste Gelenk 13 des oberen Tragarmes 7 verbindet den ersten Armabschnitt 10 und den zweiten Armabschnitt 11 gelenkig miteinander. Der erste Armabschnitt 8 des unteren Tragarmes 6 und der erste Armabschnitt 10 des oberen Tragarmes 7 sind an ihren dem ersten Gelenk 12 bzw. 13 abgewandten Enden durch ein zweites Gelenk 14 miteinander verbunden. Der zweite Armabschnitt 8 des unteren Tragarmes 6 und der zweite Armabschnitt 10 des oberen Tragarmes 7 sind an ihren dem ersten Gelenk 12 bzw. 13 abgewandten Enden durch ein drittes Gelenk 15 miteinander verbunden. Mittels de ersten Gelenke 12 und 13 sind der jeweilige untere Tragarm 6 und der obere Tragarm 7 in Form eines Parallelogramms gelenkig miteinander verbunden.

Zwischen dem ersten Gelenk 12 des unteren Tragarmes 6 und dem ersten Gelenk 13 des oberen Tragarmes 7 ist jeweils ein Dämpfungselement 16 angeordnet. Das Dämpfungselement 16 ist als eine Feder, insbesondere als eine Schraubenzugfeder, ausgeführt. Das Dämpfungselement 16 ist im Bereich des jeweiligen ersten Gelenks 12 bzw. 13 an dem unteren und oberen Tragarm 6, 7 angeordnet. Zur Einstellung der Federweges des Dämpfungselements 16 ist eine Einstellvorrichtung 17 vorgesehen. Die Einstellvorrichtung 17 ist bevorzugt als eine Gewindestange oder eine Schraube ausgeführt. Die Einstellvorrichtung 17 ist im Bereich des ersten Gelenks 13 des oberen Tragarmes 7 angeordnet. Hierdurch ist eine einfachere Zugänglichkeit gegeben, um den Federweg einzustellen bzw. zu verstellen.

An dem jeweiligen ersten Armabschnitt 8 des unteren Tragarmes 6 greift zwischen dem ersten Gelenk 12 und dem zweiten Gelenk 14 ein als Hydraulikzylinder ausgeführter Stellzylinder 18 an, der mit seinem anderen Ende an einem Rahmenteil 19 des Frontkrafthebers 2 angelenkt ist.

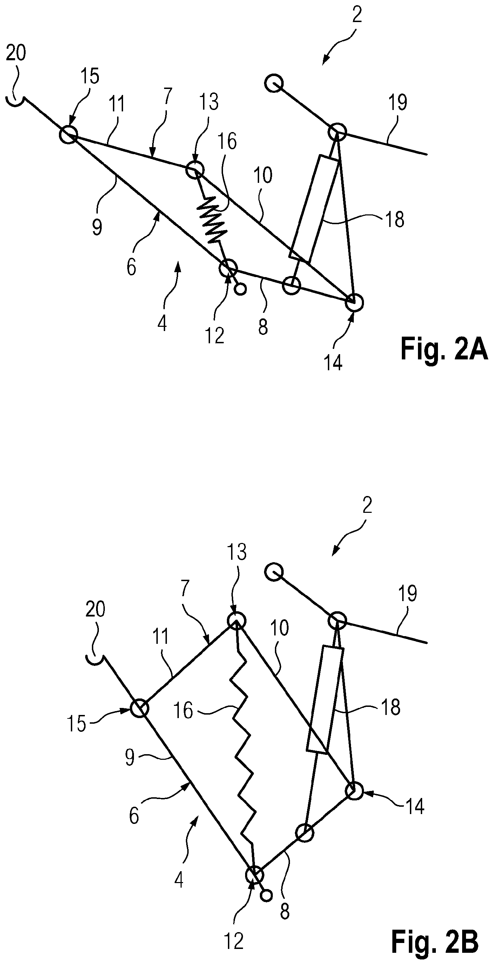

In Fig. 2A und Fig. 2B ist jeweils eine Prinzipskizze des Frontkrafthebers 2 gemäß Fig. 1 zur Veranschaulichung der Kinematik in einer ersten Position (Fig. 2A) und einer zweiten Position (Fig. 2B) gezeigt. Die Stellzylinder 18 dienen dazu, die Arbeitshöhe respektive den Abstand des Anbaugerätes 3 zum Boden einzustellen. In Fig. 2A ist der Hydraulikzylinder 18 vollständig eingefahren dargestellt. In Fig. 2B ist der Stellzylinder 18 vollständig ausgefahren dargestellt. Mittels der Dämpfungselemente 16, deren Federweg veränderbar ist, lässt sich die voreingestellte Arbeitshöhe des Anbaugerätes 3 ungeachtet der Bodenunebenheiten beibehalten. Dies wird durch das Zusammenwirken von dem jeweiligen Dämpfungselement 17 und der parallelogrammförmigen Anordnung der jeweiligen unteren Tragarme 6 und oberen Tragarme 7 bewirkt.

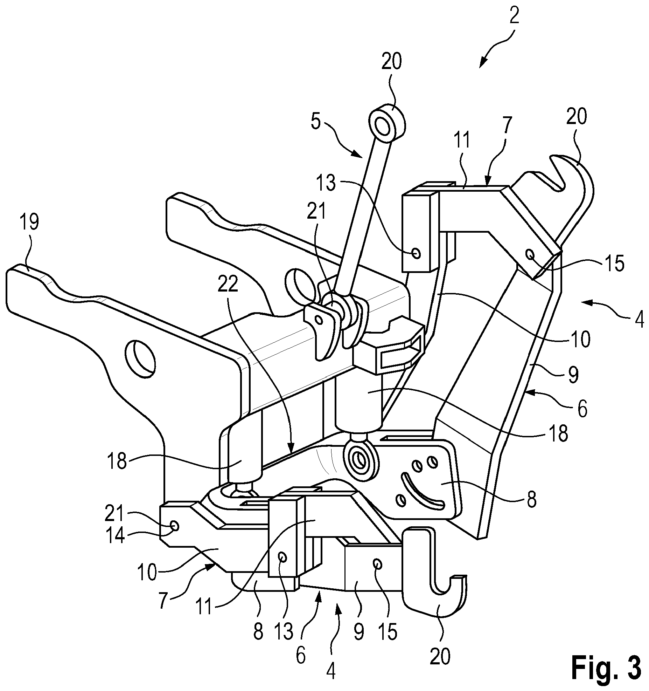

Fig. 3 zeigt eine schematische Darstellung einer Ausführungsform eines Frontkrafthebers 2 in einer isometrischen Ansicht. Der Oberlenker 5 kann in seiner Länge veränderlich ausgeführt sein, beispielsweise durch eine Ausführung als Gewindespindel. Die Unterlenker 4 weisen jeweils einen unteren Tragarm 6 auf, dessen erste Armabschnitte 8 die zueinander parallelen Schenkel eines im Wesentlichen U-förmigen rahmenförmigen Bauteils 22 sind. Das Bauteil 22 ist um die horizontale Achse 21 des zweiten Gelenks 14 an dem Rahmenteil 19 schwenkbar angelenkt.

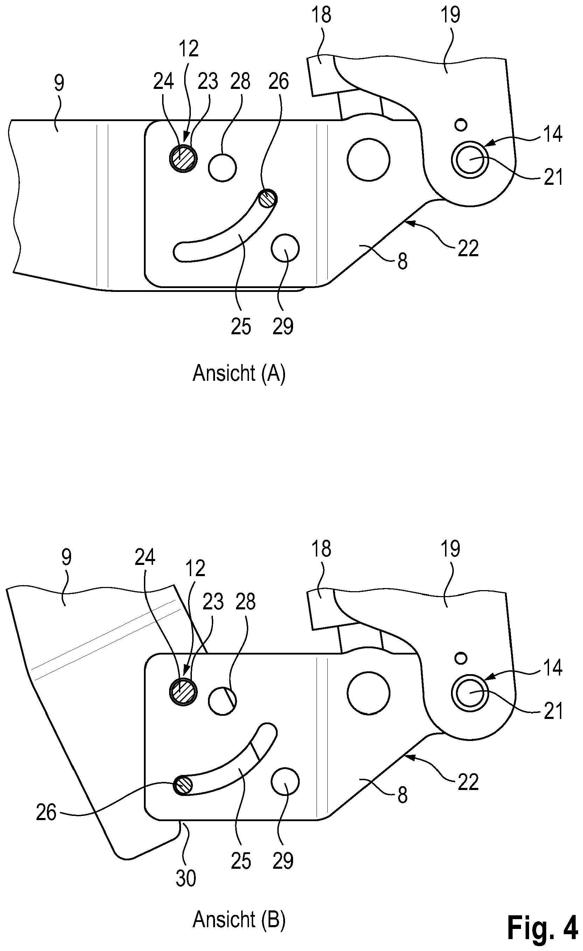

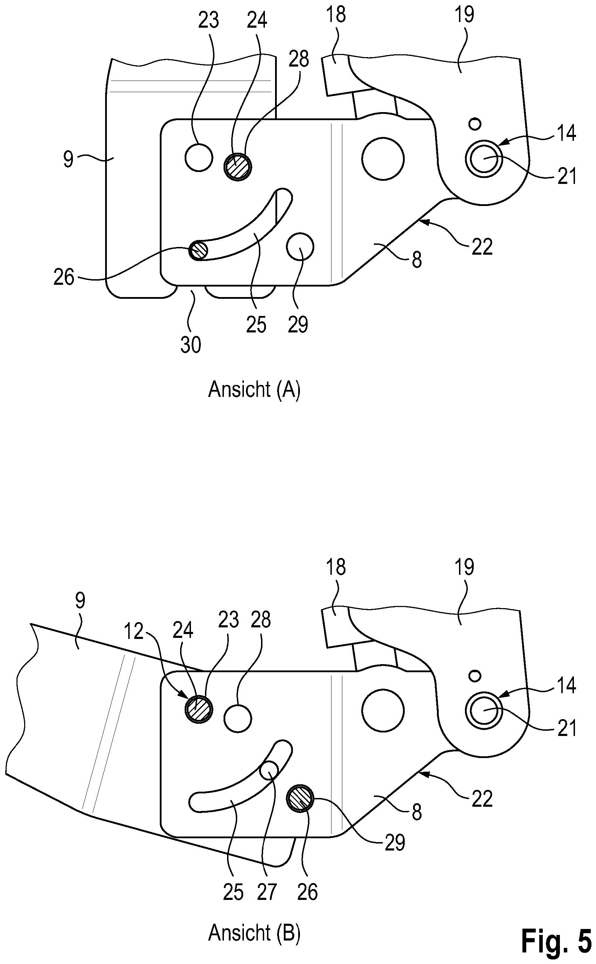

An den jeweiligen Schenkel ist einer der Stellzylinder 18 des Frontkrafthebers 2 angelenkt. Am freien Ende der Schenkel des Bauteils 22, welche die ersten Armabschnitte 8 bilden, sind die zweiten Armabschnitte 9 angelenkt. In der Darstellung in Fig. 3 ist das jeweilige Dämpfungselement 16 nicht gezeigt. Das Dämpfungselement 16 ist im Bereich des jeweiligen ersten Gelenks 12 an dem unteren Tragarm 6 und des jeweiligen zweiten Gelenks 13 an dem oberen Tragarm 7 angeordnet, wie aus den Fig. 1 bis 2B ersichtlich ist. Der in der Darstellung gemäß Fig. 3 im Vordergrund befindliche Unterlenker 4 ist in einer Position gezeigt, in welcher das Anbaugerät 3 in anteilig von dessen Gewichtskraft entlasteter Schwebestellung gehalten wird. Der im Hintergrund befindliche Unterlenker 4 ist hiervon abweichend in einer Transportstellung des Frontkrafthebers 2 gezeigt. Im Betrieb des Frontkrafthebers 2 nimmt der jeweilige Unterlenker 4 entweder die Schwebestellung oder die Transportstellung ein, nicht jedoch beide Stellungen gleichzeitig. Die unterschiedlichen Stellungen des Frontkrafthebers 2 werden nachfolgend anhand der Fig. 4 und 5 erläutert.

In Fig. 4 ist eine schematische Darstellung des ersten Armabschnitts 8 und des zweiten Armabschnitts 9 des unteren Tragarmes 6 des Frontkrafthebers 2 gemäß Fig. 3 gezeigt, wobei Ansicht (A) den zweiten Armabschnitt 8 in einer ersten Endlage und Ansicht (B) den zweiten Armabschnitt 8 in einer zweiten Endlage zeigt. Fig. 5 zeigt eine schematische Darstellung des ersten Armabschnitts 8 und des zweiten Armabschnitts 9 gemäß Fig. 4, wobei Ansicht (A) den zweiten Armabschnitt 9 in Transportposition des Frontkrafthebers 2 und Ansicht (B) den zweiten Armabschnitt 9 in fixierter Position des Frontkrafthebers 2 zeigt.

Der erste Armabschnitt 8 und der zweite Armabschnitt 9 des jeweiligen unteren Tragarmes 6 weisen jeweils eine erste Durchgangsbohrung 23 auf, die der lösbaren Aufnahme eines ersten Bolzens 24 dienen, welcher das erste Gelenk 12 des jeweiligen unteren Tragarmes 6 ausbildet. Hierbei ist das freie Ende des jeweiligen ersten Armabschnitts 8 gabelförmig ausgebildet, so dass sich zwei zueinander parallele flächige Abschnitte ausbilden, zwischen denen der zweite Armabschnitt 9 aufgenommen ist. Der Bolzen 24 erstreckt sich durch die erste Durchgangsbohrung 23 sowie die korrespondierende Durchgangsbohrung 23 des zweiten Armabschnitts 9. Koaxial zu der ersten Durchgangsbohrung 23 ist eine kreisringsegmentförmige Aussparung 25 in dem ersten Armabschnitt 8 vorgesehen, welche der Führung eines zweiten Bolzens 26 dient, der sich beabstandet zu dem in den ersten Durchgangsbohrungen 23 aufgenommenen ersten Bolzen 24 durch eine Durchbohrung 27 in dem zweiten Armabschnitt 9 erstreckt.

Der zweite Bolzen 26 ist ebenfalls lösbar in der kreisringsegmentförmigen Aussparung 25 angeordnet. Die kreisringsegmentförmige Aussparung 25 begrenzt den Schwenkwinkel, um welchen der zweite Armabschnitt 9 gegenüber dem ersten Armabschnitt 8 um das erste Gelenk 12 schwenkbar ist. Dabei kann die kreisringsegmentförmige Aussparung 25 in Umfangsrichtung eine Erstreckung aufweisen, so dass in einer ersten Anschlagstellung bzw. ersten Endlage, in welcher der zweite Bolzen 26 an einem der äußeren Enden der kreisringsegmentförmigen Aussparung 25 anliegt, der zweite Armabschnitt 9 gegenüber dem ersten Armabschnitt 8 einen Schwenkwinkel von 0° und in einer zweiten Anschlagstellung bzw. zweiten Endlage, in welcher der zweite Bolzen 26 an dem gegenüberliegenden äußeren Ende der kreisringsegmentförmigen Aussparung 25 anliegt, einen Schwenkwinkel von bis zu 70° einschließt. Die Anordnung des ersten Bolzens 24 in der jeweiligen ersten Durchgangsbohrung 23 und des zweiten Bolzens 26 in der kreisringsegmentförmigen Aussparung 25 bewirkt, dass sich der jeweilige Unterlenker 4 und der durch das Anbaugerät 3 kinematisch mit diesem gekoppelte Oberlenker 5 in einer Schwebeposition befinden. Innerhalb des durch kreisringsegmentförmige Aussparung 25 vorgegebenen Schwenkwinkels kann das an das Frontkrafthubwerk 2 angebaute Anbaugerät 3 eine Ausgleichsbewegung ausführen, um auf Bodenunebenheiten zu reagieren.

Benachbart zu der ersten Durchgangsbohrung 23 ist eine zweite Durchgangsbohrung 28 in dem ersten Armabschnitt 8 und dem zweiten Armabschnitt 9 angeordnet, mittels der der untere Tragarm 6 und der obere Tragarm 7 durch Umstecken des ersten Bolzens 24 von der ersten Durchgangsbohrung 23 in die zweite Durchgangsbohrung 28 in einer Transportposition gehalten ist, wie in Fig. 5 Ansicht (A) dargestellt. Der zweite Bolzen 26 liegt dabei am äußeren Ende der kreisringsegmentförmigen Aussparung 25 an. In der Transportposition des Frontkrafthubwerkes 2 befindet sich der zweite Armabschnitt 9 des jeweiligen unteren Tragarmes 6 in einer im Wesentlichen vertikalen Position zur Längsachse des ersten Armabschnittes 8.

Die Darstellung in Fig. 5, Ansicht (B) zeigt das Frontkrafthubwerk 2 in einer fixierten Position. In dem ersten Armabschnitt 8 ist eine dritte Durchgangsbohrung 29 der ersten Durchgangsbohrung 23 diagonal gegenüberliegend angeordnet, welche der Aufnahme des zweiten Bolzens 26 dient. Von der Stirnseite des zweiten Armabschnitts 9 ausgehend erstreckt sich eine Ausnehmung 30 abschnittsweise in Längsrichtung des zweiten Armabschnitts 9. Um den zweiten Armabschnitt 9 gegenüber dem ersten Armabschnitt 8 in einer von der Lage der dritten Durchgangsbohrung 29 abhängigen Winkelposition zu fixieren, ist der erste Bolzen 24 in den ersten Durchgangsbohrungen 23 angeordnet, während der zweite Bolzen 26 sich durch die dritte Durchgangsbohrung 29 des ersten Armabschnitts 8 sowie die Ausnehmung 30 in dem zweiten Armabschnitt 9 erstreckt. In fixierter Stellung wird eine vertikale Ausgleichsbewegung des Anbaugerätes 3 unterdrückt.

### Bezugszeichenliste

- 1: Arbeitsmaschine
- 2: Frontkraftheber
- 3: Anbaugerät
- 4: Unterlenker
- 5: Oberlenker
- 6: Unterer Tragarm
- 7: Oberer Tragarm
- 8: Erster Armabschnitt
- 9: Zweiter Armabschnitt
- 10: Erster Armabschnitt
- 11: Zweiter Armabschnitt
- 12: Erstes Gelenk
- 13: Erstes Gelenk
- 14: Zweites Gelenk
- 15: Drittes Gelenk
- 16: Dämpfungselement
- 17: Einstellvorrichtung
- 18: Stellzylinder
- 19: Rahmenteil
- 20: Aufhängepunkt
- 21: Horizontale Achse
- 22: Bauteil
- 23: Erste Durchgangsbohrung
- 24: Erster Bolzen
- 25: Kreisringsegmentförmige Aussparung
- 26: Zweiter Bolzen
- 27: Durchbohrung
- 28: Zweite Durchgangsbohrung
- 29: Dritte Durchgangsbohrung
- 30: Ausnehmung

## Patentansprüche

1. Frontkraftheber (2) zur Aufnahme eines Anbaugerätes (3), mit einem Rahmenteil (19), an dem ein Oberlenker (5) und zumindest ein Unterlenker (4) jeweils um eine horizontal verlaufende Achse (21) schwenkbar angelenkt und angeordnet sind.
**dadurch gekennzeichnet, dass** der zumindest eine Unterlenker (4) jeweils einen unteren Tragarm (6) und einen oberen Tragarm (7) jeweils mit mindestens einem ersten Gelenk (12, 13) aufweist, welches einen ersten Armabschnitt (8, 10) und einen zweiten Armabschnitt (9, 11) des jeweiligen Tragarmes (6, 7) gelenkig miteinander verbindet, wobei der jeweilige obere Tragarm (7) und untere Tragarm (6) in Form eines Parallelogramms gelenkig miteinander verbunden sind, und dass zwischen dem ersten Gelenk (12) des unteren Tragarmes (6) und dem ersten Gelenk (13) des oberen Tragarmes (7) jeweils ein Dämpfungselement (16) angeordnet ist.

2. Frontkraftheber (2) nach Anspruch 1, **dadurch gekennzeichnet, dass** das jeweilige Dämpfungselement (16) mittels einer Einstellvorrichtung (17) einstellbar ist.

3. Frontkraftheber (2) nach Anspruch 1 oder 2, **dadurch gekennzeichnet, dass** das jeweilige Dämpfungselement (16) als eine Feder ausgeführt ist.

4. Frontkraftheber (2) nach Anspruch 3, **dadurch gekennzeichnet, dass** der Federweg der Feder mittels einer Schraube oder Gewindestange einstellbar ist.

5. Frontkraftheber (2) nach einem der Ansprüche 1 bis 4, **dadurch gekennzeichnet, dass** an dem jeweiligen Unterlenker (4) zumindest ein Stellzylinder (18) angeordnet ist.

6. Frontkraftheber (2) nach Anspruch 5, **dadurch gekennzeichnet, dass** der zumindest eine Stellzylinder (18) an dem ersten Armabschnitt (8) des unteren Tragarmes (6) angelenkt ist.

7. Frontkraftheber (2) nach einem der Ansprüche 1 bis 6, **dadurch gekennzeichnet, dass** der erste Armabschnitt (8) und der zweite Armabschnitt (9) des jeweiligen unteren Tragarmes (6) jeweils eine erste Durchgangsbohrung (23) aufweisen, die der lösbaren Aufnahme eines ersten Bolzens (24) dienen, welcher das erste Gelenk (12) des jeweiligen unteren Tragarmes (6) ausbildet.

8. Frontkraftheber (2) nach Anspruch 7, **dadurch gekennzeichnet, dass** koaxial zu der ersten Durchgangsbohrung (23) eine kreisringsegmentförmige Aussparung (25) in dem ersten Armabschnitt (8) vorgesehen ist, welche der Führung eines zweiten Bolzens (26) dient, der sich beabstandet zu dem in den ersten Durchgangsbohrungen (23) aufgenommenen ersten Bolzen (24) durch eine Durchbohrung (27) in dem zweiten Armabschnitt (9) erstreckt.

9. Frontkraftheber (2) nach Anspruch 7 oder 8, **dadurch gekennzeichnet, dass** benachbart zu der ersten Durchgangsbohrung (23) eine zweite Durchgangsbohrung (28) in dem ersten Armabschnitt (8) und dem zweiten Armabschnitt (9) angeordnet ist, mittels der der untere Tragarm (6) und der obere Tragarm (7) durch Umstecken des ersten Bolzens (24) von der ersten Durchgangsbohrung (23) in die zweite Durchgangsbohrung (28) in einer Transportposition gehalten ist.

10. Frontkraftheber (2) nach Anspruch 8 oder 9, **dadurch gekennzeichnet, dass** in dem ersten Armabschnitt (8) eine dritte Durchgangsbohrung (29) der ersten Durchgangsbohrung (23) diagonal gegenüberliegend angeordnet ist, welche der Aufnahme des zweiten Bolzens (26) dient, um den zweiten Armabschnitt (9) gegenüber dem ersten Armabschnitt (8) in einer von der Lage der dritten Durchgangsbohrung (29) abhängigen Winkelposition zu fixieren.

11. Landwirtschaftliche oder kommunale Arbeitsmaschine (1) mit einem Frontkraftheber (2), **dadurch gekennzeichnet, dass** der Frontkraftheber (2) nach einem der Ansprüche 1 bis 10 ausgebildet ist.

## Claims

1. A front power linkage (2) for receiving an attachment (3), with a frame portion (19) on which an upper link (5) and at least one lower link (4) are respectively pivotably articulated and disposed about a horizontally extending axis (21),
**characterized in that** the at least one lower link (4) respectively has a lower support arm (6) and an upper support arm (7) each with at least one first joint (12, 13) which connects and articulates a first arm section (8, 10) and a second arm section (9, 11) of the respective support arm (6, 7), wherein the respective upper support arm (7) and lower support arm (6) are connected and articulated together in the form of a parallelogram, and **in that** a respective damping element (16) is disposed between the first joint (12) of the lower support arm (6) and the first joint (13) of the upper support arm (7).

2. The front power linkage (2) according to claim 1, **characterized in that** the respective damping element (16) can be adjusted by means of an adjustment device (17).

3. The front power linkage (2) according to claim 1 or claim 2, **characterized in that** the respective damping element (16) is configured as a spring.

4. The front power linkage (2) according to claim 3, **characterized in that** the travel of the spring can be adjusted by means of a screw or a threaded rod.

5. The front power linkage (2) according to one of claims 1 to 4, **characterized in that** at least one positioning cylinder (18) is disposed on the respective lower link (4).

6. The front power linkage (2) according to claim 5, **characterized in that** the at least one positioning cylinder (18) is articulated to the first arm section (8) of the lower support arm (6).

7. The front power linkage (2) according to one of claims 1 to 6, **characterized in that** the first arm section (8) and the second arm section (9) of the respective lower support arm (6) have a respective first through hole (23) which serves to detachably receive a first pin (24) which forms the first joint (12) of the respective lower support arm (6).

8. The front power linkage (2) according to claim 7, **characterized in that** a recess (25) which is in the shape of a segment of a circle and which is coaxial with the first through hole (23) is provided in the first arm section (8) and serves to guide a second pin (26) which extends through a through hole (27) in the second arm section (9) at a distance from the first pin (24) received in the first through hole (23).

9. The front power linkage (2) according to claim 7 or claim 8, **characterized in that** a second through hole (28) is disposed adjacent to the first through hole (23) in the first arm section (8) and in the second arm section (9), by means of which the lower support arm (6) and the upper support arm (7) is retained in a transport position by changing the position of the first pin (24) from the first through hole (23) to the second through hole (28).

10. The front power linkage (2) according to claim 8 or claim 9, **characterized in that** a third through hole (29) which is diagonally opposite the first through hole (23) is disposed in the first arm section (8) and serves to receive the second pin (26) in order to fix the second arm section (9) with respect to the first arm section (8) in an angular position which is dependent on the position of the third through hole (29).

11. An agricultural or municipal working machine (1) with a front power linkage (2), **characterized in that** the front power linkage (2) is configured in accordance with one of claims 1 to 10.

## Revendications

1. Relevage avant (2) pour recevoir un outil rapporté (3), comprenant une partie de bâti (19), sur laquelle un bras supérieur (5) et au moins un bras inférieur (4) sont articulés de manière pivotante respectivement autour d'un axe s'étendant horizontalement (21), **caractérisé en ce que** le au moins un bras inférieur (4) comporte respectivement un bras porteur inférieur (6) et un bras porteur supérieur (7) respectivement avec au moins une première articulation (12, 13), laquelle relie l'une à l'autre de manière articulée une première portion de bras (8, 10) et une seconde portion de bras (9, 11) du bras porteur respectif (6, 7), le bras porteur supérieur respectif (7) et le bras porteur inférieur respectif (6) étant reliés l'un à l'autre de manière articulée en forme de parallélogramme, et **en ce qu'**entre la première articulation (12) du bras porteur inférieur (6) et la première articulation (13) du bras porteur supérieur (7) est disposé respectivement un élément amortisseur (16).

2. Relevage avant (2) selon la revendication 1, **caractérisé en ce que** l'élément amortisseur (16) respectif est réglable au moyen d'un dispositif de réglage (17).

3. Relevage avant (2) selon la revendication 1 ou 2, **caractérisé en ce que** l'élément amortisseur (16) respectif est conformé en ressort.

4. Relevage avant (2) selon la revendication 3, **caractérisé en ce que** la course élastique du ressort est réglable au moyen d'une vis ou d'un tige filetée.

5. Relevage avant (2) selon une des revendications 1 à 4, **caractérisé en ce que** sur le bras inférieur (4) respectif est disposé au moins un vérin de réglage (18).

6. Relevage avant (2) selon la revendication 5, **caractérisé en ce que** le au moins un vérin de réglage (18) est articulé sur la première portion de bras (8) du bras porteur inférieur (6).

7. Relevage avant (2) selon une des revendications 1 à 6, **caractérisé en ce que** la première portion de bras (8) et la seconde portion de bras (9) du bras porteur inférieur (6) respectif comportent respectivement un premier trou traversant (23) qui servent à la réception amovible d'un premier goujon (24), lequel forme la première articulation (12) du bras porteur inférieur (6) respectif.

8. Relevage avant (2) selon la revendication 7, **caractérisé en ce que** coaxialement au premier trou traversant (23) est prévu dans la première portion de bras (8) un évidement en forme de segment d'anneau circulaire (25) qui sert au guidage d'un second goujon (26), lequel s'étend à distance du premier goujon (24) reçu dans les premiers trous traversants (23) à travers un trou débouchant (27) dans la seconde portion de bras (9) .

9. Relevage avant (2) selon la revendication 7 ou 8, **caractérisé en ce qu'**au voisinage du premier trou traversant (23) est ménagé dans la première portion de bras (8) et dans la seconde portion de bras (9) un second trou traversant (28) au moyen duquel le bras porteur inférieur (6) et le bras porteur supérieur (7) sont maintenus dans une position de transport par déplacement du premier goujon (24) du premier trou traversant (23) vers le second trou traversant (28).

10. Relevage avant (2) selon la revendication 8 ou 9, **caractérisé en ce que** dans la première portion de bras (8) est disposée, à l'opposé en diagonale du premier trou traversant (23), un troisième trou traversant (29) qui sert à la réception du second goujon (26) afin d'immobiliser la seconde portion de bras (9) par rapport à la première portion de bras (8) dans une position angulaire dépendante de la position du troisième trou traversant (29).

11. Machine de travail agricole ou communale (1) avec un relevage avant (2), **caractérisée en ce que** le relevage avant (2) est conçu selon une des revendications 1 à 10.
